# EUROPÄISCHE PATENTSCHRIFT

(11) **EP 3 426 938 B1**
(45) Veröffentlichungstag und Bekanntmachung des Hinweises auf die Patenterteilung: **24.02.2021**
(21) Anmeldenummer: 17715898.7
(22) Anmeldetag: 06.03.2017
(51) Int. Cl.: F16C 29/06, F16C 33/66, F16C 41/00

(54) **LINEARFÜHRUNG**
LINEAR ROLLER BEARING
GUIDAGE LINEAIRE

(30) Priorität: 10.03.2016 DE 102016203952
(43) Veröffentlichungstag der Anmeldung: 16.01.2019
(73) Patentinhaber: Schaeffler Technologies AG & Co. KG, 91074 Herzogenaurach (DE)
(72) Erfinder: DANIEL, Patrick, 66459 Kirkel (DE); RUDY, Dietmar, 66501 Kleinbundenbach (DE)
(86) Internationale Anmeldenummer: PCT/DE2017/100177
(87) Internationale Veröffentlichungsnummer: WO 2017/152910

(56) Entgegenhaltungen:
- EP-A1- 1 502 700
- DE-A1- 10 307 882
- DE-A1-102010 007 646
- JP-A- 2012 193 803

## Beschreibung

### Die vorliegende Erfindung betrifft eine Linearführung.

Aus EP1502700 A1 ist eine Linearführung nach den Merkmalen des Oberbegriffs des Anspruchs 1 bekannt geworden. Ein auf einer Führungsschiene angeordneter Führungswagen ist mit Wälzkörpern versehen, die in endlosen Umlaufkanälen umlaufen, die jeweils einen Lastabschnitt, einen Rücklaufabschnitt, sowie zwei, den Lastabschnitt mit dem Rücklaufabschnitt endlos verbindende Umlenkabschnitte aufweisen. Die Umlenkabschnitte sind jeweils von einer Innenumlenkung und einer Außenumlenkung begrenzt. Der Lastabschnitt wird von Laufbahnen begrenzt, die an dem Führungswagen und an der Führungsschiene ausgebildet sind. Der Führungswagen weist einen Tragkörper und an die Stirnseiten des Tragkörpers anschließende Kopfstücke aus Kunststoff auf. Die Außenumlenkungen der Umlenkabschnitte sind den Kopfstücken zugeordnet. Eine an den Führungswagen angebrachte, als Vorsatzelement ausgeführte Messeinrichtung ist zur Erfassung einer Belastung des Führungswagens vorgesehen. Die Messeinrichtung weist Abstandssensoren zum Detektieren eines Abstandes zwischen der Führungsschiene und dem Führungswagen aufweist. Unter Belastung des Führungswagens mit einer äußeren Last federn die Wälzkörper im Lastabschnitt ein. Unter dieser Einfederung nähert sich der Führungswagen der Führungsschiene geringfügig an. Diese Annäherung oder Abstandsänderung wird von den Abstandssensoren erfasst.

Im Betrieb derartiger Linearführung kann infolge von Verschmutzung oder Mangelschmierung ein erhöhter Umlaufwiderstand der endlos umlaufenden Wälzkörper oder Wälzkörperketten in den endlosen Umlaufkanälen festgestellt werden, der schließlich zu einem Versagen der Linearführung führen kann. Aufgabe der Erfindung war es, eine Linearführung nach den Merkmalen des Oberbegriffs des Anspruchs 1 anzugeben, mit der eine Erhöhung des Umlaufwiderstands der Wälzkörper oder Wälzkörperketten festgestellt werden kann.

Erfindungsgemäß wurde diese Aufgabe durch die Linearführung gemäß Anspruch 1 gelöst. Zweckdienliche Weiterbildungen sind in den Unteransprüchen angegeben.

Die erfindungsgemäße Linearführung ist mit einem auf einer Führungsschiene angeordneten Führungswagen versehen. Wälzkörper laufen in endlosen Umlaufkanälen um, die jeweils einen Lastabschnitt, einen Rücklaufabschnitt sowie zwei, den Lastabschnitt mit dem Rücklaufabschnitt endlos verbindende Umlenkabschnitte aufweisen. Der Führungswagen weist einen Tragkörper und an die Stirnseiten des Tragkörpers anschließende Kopfstücke auf, wobei die Umlenkabschnitte den Kopfstücken zugeordnet sind. An den Führungswagen angebracht ist eine als Vorsatzelement ausgeführte Messeinrichtung zur Erfassung einer Belastung des Führungswagens, wobei die Messeinrichtung wenigstens einen Abstandssensor zum Detektieren eines Abstandes zwischen der Führungsschiene und dem Führungswagen aufweist. Dadurch, dass durch das Umlaufen der Wälzkörper bedingte Auslenkungen des Kopfstückes gegenüber dem Tragkörper durch den wenigstens einen Abstandssensor als Abstandsänderung des Vorsatzelementes gegenüber der Führungsschiene detektiert wird, lässt sich neben der Einsinkrate des Führungswagens unter seiner äußeren Last zusätzlich ein Umlaufwiderstand der Wälzkörperketten feststellen und dessen Veränderung messtechnisch erfassen.

Es wurde beobachtet, dass die umlaufenden Wälzkörper im Umlenkabschnitt Druck auf das Kopfstück ausüben, der mit zunehmender Verschmutzung im Umlaufkanal oder infolge Mangelschmierung zunimmt. Die Wälzkörper üben unter ihrem Umlaufen in dem Umlenkabschnitt leichte Kraftimpulse auf das Kopfstück aus, die sich als leichte pulsierende Verformung des Kopfstückes bemerkbar machen. Diese pulsierende Bewegung des Kopfstückes hat eine Periodenlänge, die dem doppelten Wälzkörperabstand entspricht.
Das Signal des Abstandssensors weist neben der Einfederung des Führungswagens unter seiner äußeren Last eine leichte überlagerte periodische Amplitude auf, deren Periodenlänge diesem doppelten Wälzkörperabstand entspricht.

Die Umlenkabschnitte können jeweils von einer Innenumlenkung und von einer Außenumlenkung begrenzt sein. Die Außenumlenkungen der Umlenkabschnitte können beispielsweise als Umlenkschale an das Kopfstück angespritzt sein. Die umlaufenden Wälzkörper werden entlang der Außenumlenkung geführt und üben Impulse auf die Außenumlenkung auf, die auf das Kopfstück übertragen werden.

Die Erfindung nutzt demzufolge die Abstandssensoren einerseits zum Detektieren des Absenkens des Führungswagens gegenüber der Führungsschiene unter Last und andererseits zum Erfassen dieser pulsierenden Verformung oder Auslenkung des Kopfstücks gegenüber dem Tragkörper des Führungswagens.

Der Abstandssensor ist vorzugsweise als berührungsloser Wirbelstromsensor oder als berührungsloser kapazitiver Sensor ausgeführt.

Je nach Schmierzustand ändert sich der Druck durch die Wälzkörper auf das Kopfstück. Bei extremer Mangelschmierung zeigt die Erfahrung, dass der Druck so hoch wird, dass dies zum Kopfstückbruch führen kann. Es wurde erkannt, dass bei weniger Schmierung die Amplitude des Signales durch den zunehmenden Kopfstückdruck ansteigt. Diese Amplitude kann als Indikator zur Steuerung einer automatisierten Nachschmierung herangezogen werden.

Ähnlich wirkt sich Verschmutzung aus. Dieser sammelt sich im Wälzkörperkanal an und führt ebenfalls zur Erhöhung des Kopfstückdruckes. Auch dann steigt die Amplitude und eine Nachschmierung kann ausgelöst werden. Auch Pittings oder vergleichbare Laufbahnschädigungen haben Auswirkungen auf den Umlaufwiderstand der Wälzkörperketten.

Die typischen Einfederungen des Führungswagens während des Betriebes einer Linearführung liegen unter 10 µm. Durch die gemessene Einfederung kann über die Systemsteifigkeit direkt auf die Belastung des Wagens zurückgeschlossen werden.

Bei Tischanordnungen sind mehrere Führungswagen und Schienen mit einer Platte verbunden. In diesen Fällen kann es ausreichend sein, jedes Vorsatzelement jedes Führungswagens mit zwei Sensoren in senkrecht aufeinander stehenden Achsen zu versehen, wobei beide Achsen quer zur Längsachse der Führungsschiene angeordnet sind. Mit dieser Anordnung können sowohl Zug- und Druckbelastungen unter der äußeren Last des Führungswagens erfasst werden als auch Seitenlasten.

Diese beiden Achsen können horizontal und vertikal angeordnet sein. Der vertikal eingerichtete Abstandssensor erfasst das Absinken des Führungswagens unter Last. Der horizontal eingerichtete Sensor erfasst Querbewegungen des Führungswagens um eine Querachse, die in dieser Anordnung mit der vertikalen Achse zusammenfällt.

Denkbar sind auch beidseitig an beiden Stirnseiten des Führungswagens angebrachte Vorsatzelemente mit jeweils mindestens zwei Sensoren. Somit können auch Gierbewegungen und- momente des Führungswagens gemessen werden. Gleiches gilt für ein nur an einer Stirnseite des Führungswagens angebrachtes Vorsatzelement, bei dem entsprechend vier Sensoren integriert sind, deren Messflächen zumindest teilweise in der Verfahrrichtung versetzt sein müssen.

Das Vorsatzelement ist starr oder steif mit dem üblicherweise aus Stahl hergestellten Tragkörper verbunden. Konstruktiv ist sichergestellt, dass das Vorsatzelement in Kontakt mit dem Kopfstück steht, dessen pulsierende Bewegungen auf das Vorsatzelement übertragen und von den Abstandssensoren als pulsierendes Signal erfasst werden können.

Dieser Kontakt zwischen dem Vorsatzelement und dem Kopfstück kann zum Beispiel an dem Kunststoffkopfstück mittels kleiner Spitzen, ähnlich Energierichtungsgeber zum Ultraschallschweißen ausgeführt sein, die sich unter dem Druck der Schraubenkraft - wenn das Vorsatzelement mittels Schraubbolzen mit dem Tragkörper verschraubt ist - verformen und so eine spielfreie Ankopplung ermöglichen.

Eine weitere Möglichkeit der Ankopplung des Vorsatzelementes kann durch Schraubbolzen oder Gewindestifte realisiert werden, die durch das Gehäuse geschraubt auf das Kopfstück treffen. Eine weitere Möglichkeit des Überbrückens eines Spaltes zwischen Kopfstück und Vorsatzelement besteht darin, eine Zwischenlage aus einem elastischen oder einem spaltfüllenden Material - das auch aushärtbar sein kann - einzubringen.

Die hier vorgeschlagene Linearführung ermöglicht eine Aussage über den Zustand der Führung und misst die auf den Wagen einwirkenden äußeren Kräfte in Größe und Richtung.

Das Vorsatzelement kann mittels wenigstens eines Schraubbolzens an den Tragkörper geschraubt sein, wobei Auslenkungen des Tragkörpers quer zu der Führungsschiene über den wenigstens einen Schraubbolzen in das Vorsatzelement übertragen werden.

Das Vorsatzelement weist ein Gehäuse auf, das in Kontakt mit dem Kopfstück ist.

Der Schraubbolzen kann zweiteilig ausgeführt sein, dessen erstes Bolzenteil mit dem Tragkörper und dessen zweites Bolzenteil mit dem ersten Bolzenteil verschraubt ist, wobei das Gehäuse zwischen dem ersten Bolzenteil und dem zweiten Bolzenteil gehalten ist. Gehalten bedeutet in diesem Zusammenhang, dass insbesondere spielbehaftete Kippbewegungen des Gehäuses gegenüber dem Schraubbolzen ausgeschlossen sind. Auf diese Weise kann das erste Bolzenteil fest mit Tragkörper des Führungswagens verschraubt werden und Einsinkbewegungen des Führungswagens gegenüber der Führungsschiene werden einwandfrei über den Schraubbolzen in das Gehäuse des Vorsatzelementes übertragen, so dass die Abstandssensoren diese Einsinkbewegung einwandfrei erfassen können.

Das steif mit dem Tragkörper verbundene Gehäuse kann an dem Kopfstück anliegen, wobei Auslenkungen des Kopfstückes gegenüber dem Tragkörper von dem Kopfstück auf das Gehäuse übertragen werden. Diese Übertragung kann als federnder Impuls von den Abstandssensoren erfasst werden.

Das Vorsatzelement kann eine zwischen dem Gehäuse und dem Kopfstück angeordnete Zwischenlage aufweisen, die an ihrer dem Kopfstück zugewandten Stirnseite den ersten Kontaktabschnitt aufweist. Die Zwischenlage kann als inkompressible elastische Platte ausgeführt sein; sie kann auch spaltfüllend zwischen Kopfstück und Gehäuse eingegossen werden und aushärten.

Das Vorsatzelement ist mit Energierichtungsgebern versehen , die wirksam zwischen dem Kopfstück und dem Gehäuse angeordnet sind. Vorzugsweise ist der Energierichtungsgeber einstellbar ausgebildet, durch eine einerseits in das Gehäuse eingeschraubte und andererseits an dem Kopfstück abgestützte Stellschraube gebildet.

Vorzugsweise ist das Vorsatzelement mit je einem Abstandssensor für jede Laufbahn der Führungsschiene versehen und unabhängig von den anderen Abstandssensoren angekoppelt. Auf diese Weise kann jeder Umlaufkanal separat überwacht und beispielsweise eine Mangelschmierung aufgrund einer erhöhten Auslenkung des Kopfstückes in dem zugeordneten Abschnitt erkannt werden.

Die erfindungsgemäße Linearführung ist vorzugsweise mit einem Schmieraggregat zum Schmieren des Umlaufkanals sowie mit einer der Messeinrichtung zugeordneten Auswerteeinheit versehen, die abhängig von dem Betrag der detektierten Abstandsänderung ein Signal an das Schmieraggregat zum Nachschmieren des Umlaufkanals leitet. Bei einer unabhängigen Ankopplung jedes einzelnen Sensors für jeden Wälzkörperumlauf kann bei geeigneter Anordnung der Schmierstoffversorgung und Schaltung des Schmierstoffgebers nur die jeweils betroffene Laufbahn mit Schmierstoff versorgt werden. Auf diese Weise kann jede Laufbahn je nach Belastung bedarfsgerecht mit der Minimal benötigten Schmiermenge zu einem von der realen Belastung abhängigen Zeitpunkt versorgt werden. Der Schmierstoffverbrauch kann demzufolge für jeden Umlaufkanal eingestellt und unnötige Schmierung vermieden werden.

Nachstehend wird die Erfindung anhand von vier in insgesamt 11 Figuren abgebildeten Ausführungsbeispielen näher erläutert. Es zeigen:
Figur 1 eine erfindungsgemäße Linearführung in perspektivischer Darstellung,
Figur 2 eine Ansicht der Linearführung gemäß Figur 1,
Figur 3 eine Ausschnittsvergrößerung,
Figur 4 eine weitere Ansicht,
Figur 5 einen Teilschnitt der Linearführung gemäß Figur 1,
Figur 6 eine erfindungsgemäße Variante in einem Teilschnitt gemäß Figur 5,
Figur 7 eine außerhalb des Schutzumfangs liegende Linearführung in einem Teilschnitt gemäß Figur 5,
Figur 8 eine weitere erfindungsgemäße Variante in einem Teil schnitt gemäß Figur 5,
Figur 9 ein erstes Diagramm mit Messwerten bei ausreichender Schmierung,
Figur 10 ein zweites Diagramm mit Messwerten bei unzureichender Schmierung und
Figur 11 Die Linearführung aus Figur 1 mit Nachschmiereinrichtung und Auswerteeinheit.

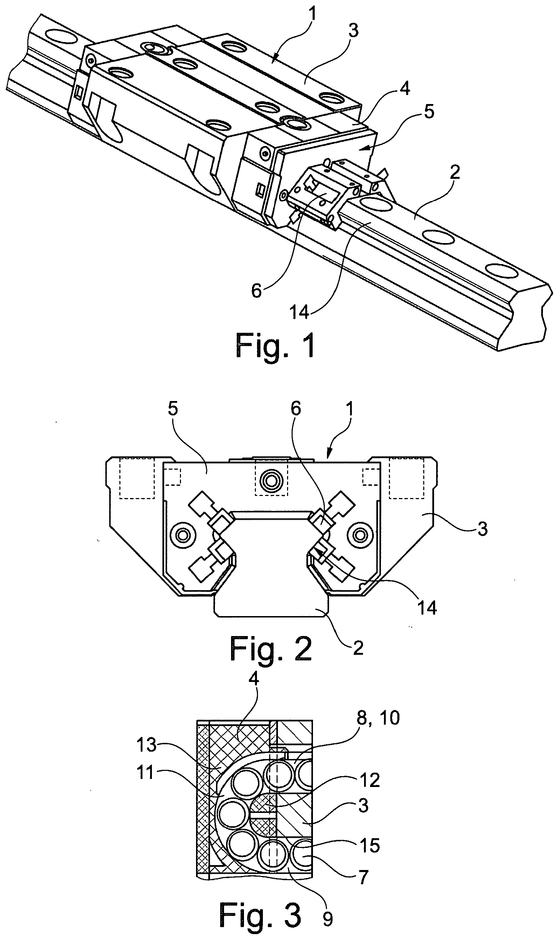

Die Figuren 1 bis 4 zeigen eine erfindungsgemäße Linearführung, mit einem auf einer Führungsschiene 2 angeordneten Führungswagen 1, der einen Tragkörper 3 und an die Stirnseiten des Tragkörpers 3 anschließende Kopfstücke 4 aus Kunststoff aufweist. Eine als Vorsatzelement 5 ausgeführte Messeinrichtung zur Erfassung einer Belastung des Führungswagens 1 ist an eine Stirnseite des Führungswagens 1 angeschlossen. Das Vorsatzelement 5 ist mit vier Abstandssensoren 6 zum Detektieren eines Abstandes zwischen der Führungsschiene 2 und dem Führungswagen 1 versehen. Die Abstandssensoren 6 sind hier als berührungslose Wirbelstromsensoren oder als kapazitive Sensoren ausgeführt.

Wälzkörper 7 laufen in endlosen Umlaufkanälen 8 um, die jeweils einen Lastabschnitt 9, einen Rücklaufabschnitt 10, sowie zwei, den Lastabschnitt 9 mit dem Rücklaufabschnitt 10 endlos verbindende Umlenkabschnitte 11 aufweisen. Jeder Umlenkabschnitt 11 ist von einer Innenumlenkung 12 und einer Außenumlenkung 13 begrenzt. Der Lastabschnitt 9 ist von Laufbahnen 14, 15 begrenzt, die an dem Führungswagen 1 und an der Führungsschiene 2 ausgebildet sind. Die Außenumlenkungen 13 der Umlenkabschnitte 11 sind den Kopfstücken 4 zugeordnet. Durch das Umlaufen der Wälzkörper 7 bedingte pulsierende Auslenkungen des Kopfstückes 4 gegenüber dem Tragkörper 3 werden durch die Abstandssensoren 6 als Abstandsänderung des Vorsatzelementes 5 gegenüber der Führungsschiene 2 detektiert.

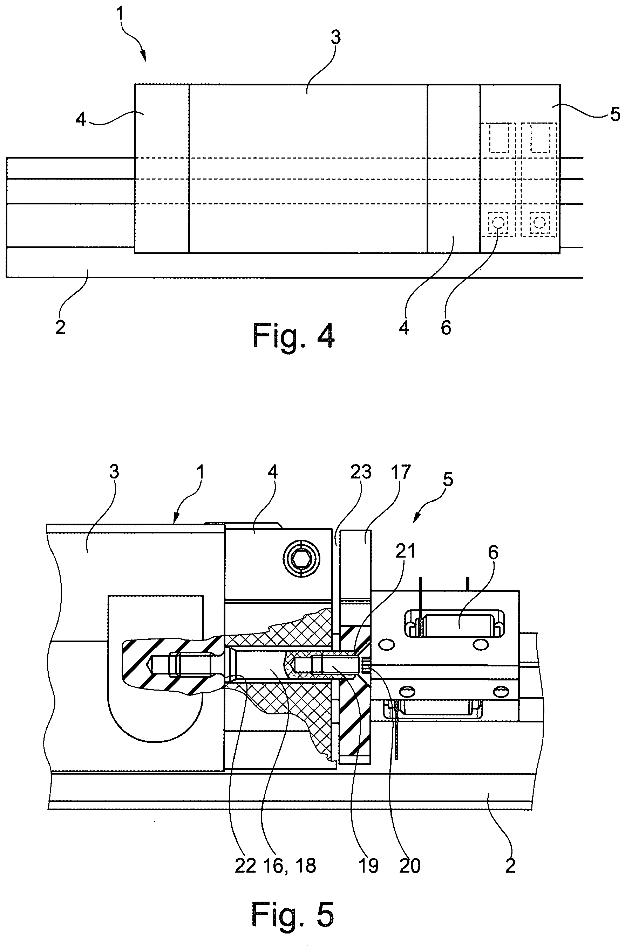

Figur 4 zeigt schematisch eine Ansicht mit den vier Abstandssensoren 6, die axial versetzt zueinander angeordnet sind.

Figur 5 zeigt die Halterung des Vorsatzelementes 5 an dem Führungswagen 1. Das Vorsatzelement 5 ist mittels mehrerer durch das Kopfstück 4 durchgreifender Schraubbolzen 16 an den Tragkörper 3 derart geschraubt, dass Auslenkungen des Tragkörpers 3 quer zu der Führungsschiene über die Schraubbolzen 16 in das Vorsatzelement 5 übertragen werden. Das Vorsatzelement 5 weist ein Gehäuse 17 auf, das die Abstandssensoren 6 aufnimmt. Der Schraubbolzen 16 ist zweiteilig ausgeführt, dessen erstes Bolzenteil 18 mit dem Tragkörper 3 und dessen zweites Bolzenteil 19 mit dem ersten Bolzenteil 18 verschraubt ist, wobei das Gehäuse 17 zwischen dem ersten Bolzenteil 18 und dem zweiten Bolzenteil 19 eingespannt ist, und zwar zwischen einem Schraubenkopf 20 des zweiten Bolzenteils 19 und einer Schulter 21 des ersten Bolzenteils 18. Das erste Bolzenteil 18 liegt mit einer weiteren Schulter 22 an dem Tragkörper 3 an. In dieser Abbildung ist ein Spalt 23 zwischen dem starr mit dem Tragkörper 3 verschraubten Gehäuse 17 und dem Kopfstück 4 ausgebildet. In diesen Spalt werden diskrete Spitzen eingebracht, die einen Kontakt zwischen Gehäuse 17 und Kopfstück 4 für die Übertragung von Impulsen von dem Kopfstück 4 auf das Gehäuse 17 zu ermöglichen, was anhand der nachstehenden Ausführungsbeispiele erläutert wird.

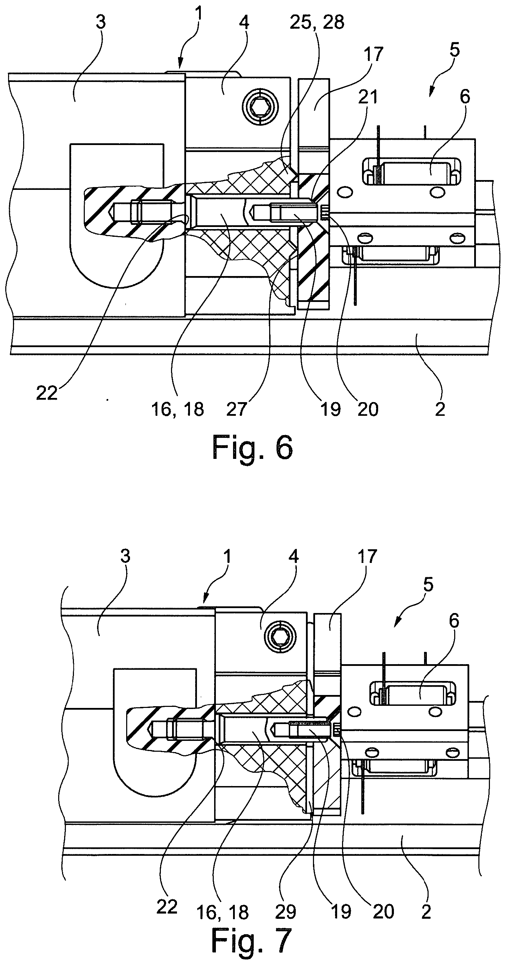

Figur 6 zeigt eine erfindungsgemäße Ausgestaltung, die sich von dem zuvor beschriebenen Ausführungsbeispiel lediglich durch den Kontakt zwischen dem Vorsatzelement 5 und dem Kopfstück 4 unterscheidet. An der dem Gehäuse 17 zugewandten Seite des Kopfstücks 4 sind über die Stirnseite verteilt angeordnete Spitzen 25 einstückig angeformt. Diese Anformung kann bereits bei der spritztechnischen Herstellung des aus Kunststoff gespritzten Kopfstücks 4 erfolgen. Unter dem Festschrauben des Gehäuses 17 mit dem Tragkörper 3 wird das Gehäuse 17 in Richtung auf die Spitzen gedrückt. Auslenkungen des Kopfstückes 4 gegenüber dem Tragkörper 3 werden über die Spitzen 25 von dem Kopfstück 4 auf das Gehäuse 17 übertragen. Die Spitzen 25 dienen als Energierichtungsgeber 28, die die Impulse gerichtet von dem Kopfstück 4 auf das Gehäuse 17 und schließlich in die Abstandssensoren 6 übertragen.

Figur 7 zeigt eine außerhalb des Schutzumfangs liegende Linearführung, die sich von dem zuvor beschriebenen Ausführungsbeispiel lediglich durch den Kontakt zwischen dem Vorsatzelement 5 und dem Kopfstück 4 unterscheidet. Zwischen dem Gehäuse 17 und dem Kopfstück 4 ist eine Zwischenlage 29 vorgesehen, die in diesem Ausführungsbeispiel flüssig in den von dem Gehäuse 17 und dem Kopfstück 4 begrenzten Spalt eingebracht und darin ausgehärtet ist.

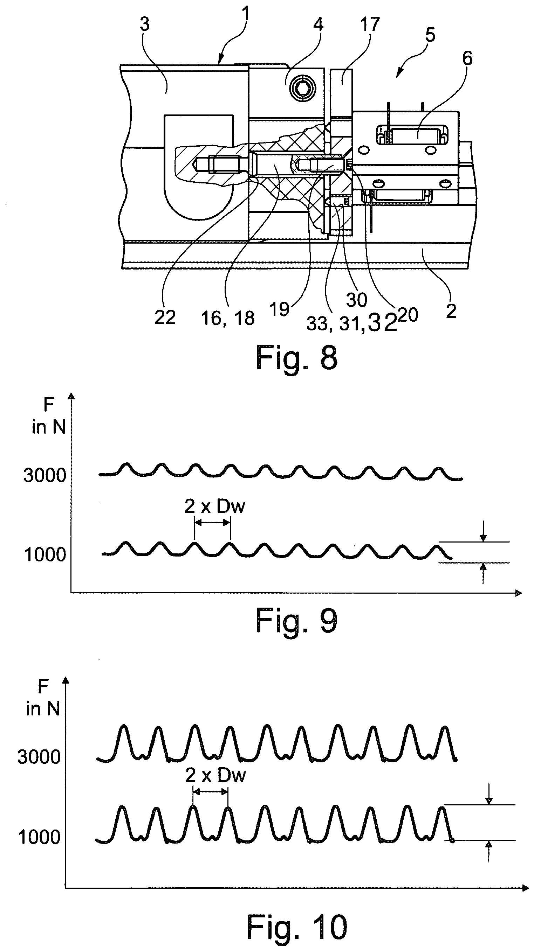

Figur 8 zeigt eine weitere erfindungsgemäße Variante, die sich von dem zuvor beschriebenen Ausführungsbeispiel gemäß Figur 6 lediglich durch den Kontakt zwischen dem Vorsatzelement 5 und dem Kopfstück 4 unterscheidet. Das Gehäuse 17 ist axial gerichteten Gewindebohrungen 30 versehen in die Gewindestifte 31 hineingeschraubt sind, die mit ihren angespitzten Enden gegen stirnseitig gegen das Kopfstück 4 angedrückt sind. Die Gewindestifte 31 dienen als Energierichtungsgeber 32, die die Impulse gerichtet von dem Kopfstück 4 auf das Gehäuse 17 und schließlich in die Abstandssensoren 6 übertragen. Mit diesen Gewindestiften 32 als Stellschrauben 33 kann der Kontakt zwischen Kopfstück 4 und Gehäuse 17 einwandfrei eingestellt werden.

Die Figuren 9 und 10 zeigen schematisch die Messsignale, die mit der erfindungsgemäßen Linearführung generiert werden. In beiden Darstellungen ist die auf den Führungswagen einwirkende äußere Last F mit Belastungen von 1000N und 3000N über den Verschiebeweg des Führungswagen entlang der Führungsschiene aufgetragen. Die Kurven sind etwa sinusförmig ausgebildet. Der Abstand zweier benachbarter Spitzen der Wellen markieren jeweils den zweifachen Durchmesser der Wälzkörper. Die Wälzkörper erzeugen beim Einlaufen in den Umlenkabschnitt des Umlaufkanals Impulse, die von dem Kopfstück in der beschriebenen Weise auf die Messeinrichtung übertragen werden.

Die Amplituden der sinusförmigen Schwingungen in beiden Figuren sind unterschiedlich groß. Ursächlich sind unterschiedliche Schmierungsbedingungen: Figur 9 zeigt die Kurve mit ausreichender Schmierung. Figur 10 zeigt eine unzureichende Schmierung der Linearführung; der Verschiebewiderstand der Wälzkörper im Umlaufkanal ist erhöht, so dass die die Auslenkung des Kopfstücks repräsentierenden Amplituden vergrößert sind.

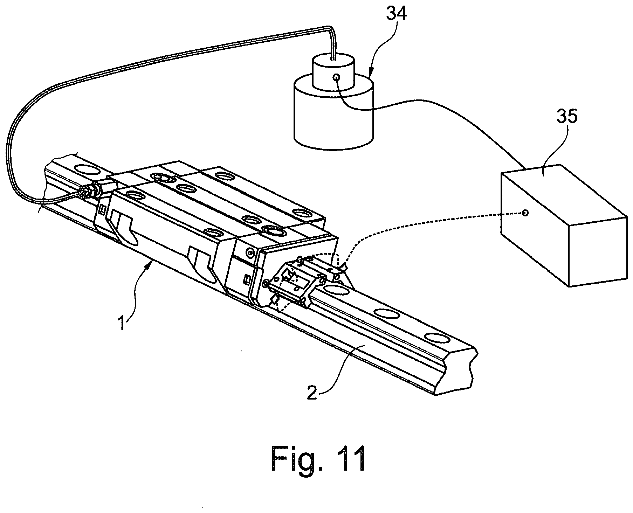

Figur 11 zeigt die erfindungsgemäße Linearführung, an die ein Schmieraggregat 34 zum Schmieren des Umlaufkanals sowie eine Auswerteeinheit 35 angeschlossen sind. Die Auswerteeinheit 35 ist einerseits an die als Vorsatzelement 5 ausgeführte Messeinrichtung und andererseits an das Schmieraggregat 34 angeschlossen. Die Auswerteeinheit 35 erfasst die von den Abstandssensoren abgegebenen Messsignale; im Fall einer unzureichenden Schmierung der Linearführung werden Schmierimpulse des Schmieraggregats ausgelöst und Schmierstoff wird in die Umlaufkanäle der Linearführung gepumpt.

Die hier abgebildete Variante mit je einem Abstandssensor für jede Laufbahn - also jeden Wälzkörperumlauf - kann kombiniert werden mit einem an dem Führungswagen angebrachten Schmierstoffverteiler, der für jeden Umlaufkanal ein schaltbares Ventil aufweist. In diesem Fall kann jeder Umlaufkanal individuell im Fall einer unzureichenden Schmierung nachgeschmiert werden.

Wirtschaftlich besonders günstig sind hier nicht abgebildete erfindungsgemäße Varianten mit lediglich einem Vorsatzelement an einer Stirnseite des Führungswagens, wobei das Vorsatzelement mit lediglich zwei Abstandssensoren ausgerüstet sind, die beide den Abstand zur Führungsschiene erfassen; der eine Abstandssensor ist auf die Schienenoberseite gerichtet, der andere auf eine Schienenlängsseite.

### Bezugszeichenliste

- 1: Führungswagen
- 2: Führungsschiene
- 3: Tragkörper
- 4: Kopfstück
- 5: Vorsatzelement
- 6: Abstandssensor
- 7: Wälzkörper
- 8: Umlaufkanal
- 9: Lastabschnitt
- 10: Rücklaufabschnitt
- 11: Umlenkabschnitt
- 12: Innenumlenkung
- 13: Außenumlenkung
- 14: Laufbahn
- 15: Laufbahn
- 16: Schraubbolzen
- 17: Gehäuse
- 18: Bolzenteil
- 19: Bolzenteil
- 20: Schraubenkopf
- 21: Schulter
- 22: Schulter
- 23: Spalt
- 24: Kontaktscheibe
- 25: Spitze
- 26:
- 27:
- 28: Energierichtungsgeber
- 29: Zwischenlage
- 30: Gewindebohrung
- 31: Gewindestift
- 32: Energierichtungsgeber
- 33.: Stellschraube
- 34: Schmieraggregat
- 35: Auswerteeinheit

## Patentansprüche

1. Linearführung, mit einem auf einer Führungsschiene (2) angeordneten Führungswagen (1), mit Wälzkörpern (7), die in endlosen Umlaufkanälen (8) umlaufen, die jeweils einen Lastabschnitt (9), einen Rücklaufabschnitt (10) sowie zwei, den Lastabschnitt (9) mit dem Rücklaufabschnitt (10) endlos verbindende Umlenkabschnitte (11) aufweisen, wobei der Führungswagen (1) einen Tragkörper (3) und an die Stirnseiten des Tragkörpers (3) anschließende Kopfstücke (4) aufweist, und wobei die Umlenkabschnitte (11) den Kopfstücken (9) zugeordnet sind, und mit einer an den Führungswagen (1) angebrachten, als Vorsatzelement (5) ausgeführten Messeinrichtung zur Erfassung einer Belastung des Führungswagens (1), wobei die Messeinrichtung wenigstens einen Abstandssensor (6) zum Detektieren eines Abstandes zwischen der Führungsschiene (2) und dem Führungswagen (1) aufweist, **dadurch gekennzeichnet, dass** durch das Umlaufen der Wälzkörper (7) bedingte pulsierende Auslenkungen des Kopfstückes (4) gegenüber dem Tragkörper (3) durch den wenigstens einen Abstandssensor (6) als Abstandsänderung des Vorsatzelementes (5) gegenüber der Führungsschiene (2) detektiert werden, wobei das Vorsatzelement (5) mit Energierichtungsgebern (28, 32) versehen ist, deren zwischen dem Kopfstück (4) und einem Gehäuse (17) des Vorsatzelementes (5) ausgebildete Spitzen (25) für einen Kontakt zwischen dem Gehäuse (17) und dem Kopfstück (4) vorgesehen sind und die pulsierenden Auslenkungen übertragen.

2. Linearführung nach Anspruch 1, deren Vorsatzelement (5) mittels wenigstens eines Schraubbolzens (16) an den Tragkörper (3) geschraubt ist, wobei Auslenkungen des Tragkörpers (3) quer zu der Führungsschiene (2) über den wenigstens einen Schraubbolzen (16) in das Vorsatzelement (5) übertragen werden.

3. Linearführung nach den Ansprüchen 1 bis 3, deren Schraubbolzen (16) zweiteilig ausgeführt ist, dessen erstes Bolzenteil (18) mit dem Tragkörper (3) und dessen zweites Bolzenteil (19) mit dem ersten Bolzenteil (18) verschraubt ist, wobei das Gehäuse (17) zwischen dem ersten Bolzenteil (18) und dem zweiten Bolzenteil (19) gehalten ist.

4. Linearführung wenigstens nach Anspruch 1, deren Gehäuse (17) an dem Kopfstück (4) anliegt, wobei Auslenkungen des Kopfstückes (4) gegenüber dem Tragkörper (3) von dem Kopfstück (4) auf das Gehäuse (17) übertragen werden.

5. Linearführung nach Anspruch 1, deren Energierichtungsgeber (28) durch eine einerseits in das Gehäuse (17) eingeschraubte und andererseits an dem Kopfstück (4) abgestützte Stellschraube (33) gebildet ist.

6. Linearführung nach einem der Ansprüche 1 bis 5, deren Vorsatzelement (5) mit je einem Abstandssensor (6) für jede Laufbahn (14) der Führungsschiene (2) versehen ist.

7. Linearführung nach einem der Ansprüche 1 bis 6, deren Umlenkabschnitte (11) jeweils von einer Innenumlenkung (12) und einer Außenumlenkung (13) begrenzt werden, wobei der Lastabschnitt (9) von Laufbahnen (14, 15) begrenzt wird, die an dem Führungswagen (1) und an der Führungsschiene (2) ausgebildet sind.

8. Linearführung nach einem der Ansprüche 1 bis 7, die ein Schmieraggregat (34) zum Schmieren des Umlaufkanals (8) sowie eine der Messeinrichtung zugeordnete Auswerteeinheit (35) aufweist, die abhängig von dem Betrag der detektierten Abstandsänderung ein Signal an das Schmieraggregat (34) zum Nachschmieren des Umlaufkanals (8) leitet.

## Claims

1. A linear guide, having a guide carriage (1) arranged on a guide rail (2), having rolling bodies (7) which revolve in continuous revolving channels (8), which each have a load portion (9), a return portion (10) and two deflecting portions (11) continuously connecting the load portion (9) to the return portion (10), wherein the guide carriage (1) has a supporting body (3) and head pieces (4) adjoining the end sides of the supporting body (3), and wherein the deflecting portions (11) are assigned to the head pieces (9), and having a measuring device, which is attached to the guide carriage (1) and designed as an attachment element (5), for detecting a loading of the guide carriage (1), wherein the measuring device has at least one distance sensor (6) for detecting a distance between the guide rail (2) and the guide carriage (1), **characterised in that** pulsating deflections of the head piece (4) in relation to the supporting body (3) caused by the revolving of the rolling bodies (7) are detected by the at least one distance sensor (6) as a distance change of the attachment element (5) in relation to the guide rail (2), wherein the attachment element (5) is provided with energy directors (28, 32), the tips (25) of which that are formed between the head piece (4) and a housing (17) of the attachment element (5) are provided for a contact between the housing (17) and the head piece (4) and transmit the pulsating deflections.

2. The linear guide according to claim 1, the attachment element (5) of which is screwed to the supporting body (3) by means of at least one screw bolt (16), wherein deflections of the supporting body (3) transverse to the guide rail (2) are transmitted to the attachment element (5) via the at least one screw bolt (16).

3. The linear guide according to claims 1 to 3, the screw bolt (16) of which is designed in two parts, the first bolt part (18) of which is screwed to the supporting body (3) and the second bolt part (19) of which is screwed to the first bolt part (18), wherein the housing (17) is held between the first bolt part (18) and the second bolt part (19).

4. The linear guide at least according to claim 1, the housing (17) of which abuts the head piece (4), wherein deflections of the head piece (4) in relation to the supporting body (3) are transmitted from the head piece (4) to the housing (17).

5. The linear guide according to claim 1, the energy director (28) of which is formed by an adjusting screw (33) which is screwed into the housing (17) on one side and supported on the head piece (4) on the other side.

6. The linear guide according to any one of claims 1 to 5, the attachment element (5) of which is provided with a distance sensor (6) for each track (14) of the guide rail (2).

7. The linear guide according to any one of claims 1 to 6, the deflecting portions (11) of which are each delimited by an inner deflector (12) and an outer deflector (13), wherein the load portion (9) is delimited by tracks (14, 15) which are formed on the guide carriage (1) and on the guide rail (2).

8. The linear guide according to any one of claims 1 to 7, which has a lubrication assembly (34) for lubricating the revolving channel (8) and an evaluation unit (35) which is assigned to the measuring device and which, depending on the magnitude of the detected distance change, sends a signal to the lubrication assembly (34) for relubricating the revolving channel (8).

## Revendications

1. Dispositif de guidage linéaire, comprenant un chariot de guidage (1) agencé sur un rail de guidage (2), comportant des corps de roulement (7), lesquels circulent dans des canaux de circulation (8) sans fin, lesquels présentent respectivement une section de charge (9), une section de retour (10) ainsi que deux sections de renvoi (11) reliant sans fin la section de charge (9) avec la section de retour (10), dans lequel le chariot de guidage (1) comporte un corps de support (3) et des pièces de tête (4) raccordées aux faces avant du corps de support (3), et dans lequel les sections de renvoi (11) sont associées aux pièces de tête (9) et comprennent un dispositif de mesure fixé au chariot de guidage (1) et conçu sous la forme d'un élément adaptateur (5) pour détecter une charge du chariot de guidage (1), dans lequel le dispositif de mesure comporte au moins un capteur de distance (6) pour détecter une distance entre le rail de guidage (2) et le chariot de guidage (1), **caractérisé en ce que** les déviations pulsées de la pièce de tête (4) par rapport au corps de support (3) provoquées par la circulation des corps de roulement (7) sont détectées par l'au moins un capteur de distance (6) en tant que changement de la distance de l'élément adaptateur (5) par rapport au rail de guidage (2), dans lequel l'élément adaptateur (5) est pourvu de capteurs de direction d'énergie (28, 32), dont les embouts (25) formés entre la pièce de tête (4) et un boîtier (17) de l'élément adaptateur (5) sont situés pour établir un contact entre le boîtier (17) et la pièce de tête (4) et pour transmettre les déviations pulsées.

2. Dispositif de guidage linéaire selon la revendication 1, dont l'élément adaptateur (5) est vissé au corps de support (3) au moyen d'au moins un boulon à vis (16), dans lequel des déviations du corps de support (3) sont transmises transversalement au rail de guidage (2) par l'intermédiaire de l'au moins un boulon à vis (16) dans l'élément adaptateur (5).

3. Dispositif de guidage linéaire selon les revendications 1 à 3, dont le boulon à vis (16) est conçu en deux parties, dont la première partie de boulon (18) est vissée sur le corps de support (3) et dont la seconde partie de boulon (19) est vissée sur la première partie de boulon (18), dans lequel le boîtier (17) est maintenu entre la première partie de boulon (18) et la seconde partie de boulon (19).

4. Dispositif de guidage linéaire au moins selon la revendication 1, dont le boîtier (17) est monté sur la pièce de tête (4), dans lequel les déviations de la pièce de tête (4) par rapport au corps de support (3) sont transmises de la pièce de tête (4) au boîtier (17).

5. Dispositif de guidage linéaire selon la revendication 1, dont le capteur de direction d'énergie (28) est formé par une vis de réglage (33) vissée dans le boîtier (17) d'une part et en appui sur la pièce de tête (4) d'autre part.

6. Dispositif de guidage linéaire selon l'une quelconque des revendications 1 à 5, dont l'élément adaptateur (5) est pourvu d'un capteur de distance (6) pour chaque piste (14) du rail de guidage (2).

7. Dispositif de guidage linéaire selon l'une quelconque des revendications 1 à 6, dont les sections de renvoi (11) sont respectivement délimitées par une déviation intérieure (12) et par une déviation extérieure (13), dans lequel la section de charge (9) est limitée par des pistes (14, 15), lesquelles sont formées sur le chariot de guidage (1) et sur le rail de guidage (2).

8. Dispositif de guidage linéaire selon l'une quelconque des revendications 1 à 7, lequel comporte une unité de lubrification (34) pour lubrifier le canal de circulation (8) et une unité d'analyse (35) associée au dispositif de mesure, laquelle, en fonction de l'importance du changement de distance détecté, conduit un signal à l'unité de lubrification (34) pour lubrifier à nouveau le canal de circulation (8).
